(19) Europäisches Patentamt
European Patent Office
Office européen des brevets

(11) **EP 2 746 801 B1**

(12) **FASCICULE DE BREVET EUROPEEN**

(45) Date de publication et mention
de la délivrance du brevet:
**27.02.2019 Bulletin 2019/09**

(51) Int Cl.:
***G01S 3/48*** *(2006.01)*

(21) Numéro de dépôt: **13198492.4**

(22) Date de dépôt: **19.12.2013**

(54) **Système de détermination d'une direction d'arrivée.**

System zur Bestimmung der Empfangsrichtung

System for determining a direction of arrival

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2012 FR 1203562**

(43) Date de publication de la demande:
**25.06.2014 Bulletin 2014/26**

(73) Titulaire: **Thales
92400 Courbevoie (FR)**

(72) Inventeur: **Lestieux, Sébastien
31100 Toulouse (FR)**

(74) Mandataire: **Priori, Enrico
Marks & Clerk France
Immeuble "Visium"
22, avenue Aristide Briand
94117 Arcueil Cedex (FR)**

(56) Documents cités:
**JP-A- S61 284 680     US-A- 4 136 342
US-A- 5 657 027       US-A1- 2005 052 316
US-B1- 6 255 991**

**Description**

La présente invention concerne un procédé de traitement goniométrique utilisant une pluralité d'antennes formant un réseau d'antennes. Ce type de procédé permet d'obtenir la direction d'arrivée de signaux radioélectriques arrivant sur les différentes antennes du réseau d'antennes.

Il est connu dans l'état de la technique des systèmes nommés système d'interférométrie de phase ou d'amplitude. Ces systèmes sont basés sur le calcul du déphasage d'un même signal reçu de deux antennes différentes. Cependant ces systèmes ne permettent pas d'obtenir une précision suffisante et sont sujets à des ambiguïtés.

Il est aussi connu que pour fonctionner correctement ces systèmes doivent avoir une distance séparant les deux antennes équivalente à la fréquence de modulation du signal reçu. Afin de contrecarrer cette contrainte il est possible d'avoir des systèmes constitués d'une pluralité de couples d'antenne dont l'écartement entre les antennes de chaque couple est différent. Cependant l'encombrement de ces systèmes est augmenté et l'adaptabilité de ces systèmes à la bande passante du signal dépend du nombre de couples d'antennes. Il est également possible d'avoir des systèmes, tel que celui décrit dans le brevet US 4.136.342 A, dans lesquels deux antennes dont le calcul d'un déphasage de phase est ambigü, sont séparées à intervalles réguliers par des antennes dont les déphasages sont deux à deux non-ambigüs, de manière à lever l'ambiguïté de phase. Là aussi, l'encombrement du sytème augmente, tandis que l'adaptabilité en bande passante est toujours liée à la configuration des antennes.

Il est connu dans l'état de la technique des systèmes mettant en oeuvre des procédés connus sous le nom de traitement de haute résolution ou formation de faisceaux. Cependant ces procédés nécessitent des ressources de calcul et un espace mémoire plus importants que ceux nécessaires aux procédés d'interférométrie de phase ou d'amplitude. Ces procédés sont donc difficilement implémentables dans des systèmes ayant un faible encombrement ou une faible consommation.

La présente invention vise donc à remédier à ces problèmes en proposant un système permettant de déterminer la direction d'arrivée d'un signal radio électrique, ayant un besoin en ressources de calcul plus faible que celui nécessaire pour la mise en oeuvre des procédés dehaute résolution et une précision supérieure à celle obtenue par les systèmes d'interférométrie.

La présente invention propose un système de détermination d'une direction d'arrivée d'un signal radio électrique comportant au moins trois antennes, des moyens configurés pour la détermination d'au moins deux déphasages, respectivement associés à des couples d'antennes différents, lesdits déphasages étant la différence entre une phase du signal reçu d'une des antennes d'un couple et une phase du signal reçu de l'autre antenne du couple. Le système comporte également des moyens configurés pour la sommation d'au moins deux des différences de phase et des premiers moyens configurés pour la détermination à partir de la sommation, d'un ensemble de paramètres respectivement associés à une direction d'arrivée supposée, par différence entre la sommation et une sommation de référence associée à la direction d'arrivée supposée. Enfin le système comporte des deuxièmes moyens configurés pour la détermination de la direction d'arrivée comme étant la direction d'arrivée supposée associée au paramètre ayant la valeur minimale.

Le système permet donc de déterminer la direction d'arrivée du signal radio électrique. De plus en fonction de la fréquence du signal reçu il est possible de modifier le choix des couples d'antennes pour lesquels le déphasage est sommé. Ceci permet de changer artificiellement l'écartement entre les antennes.

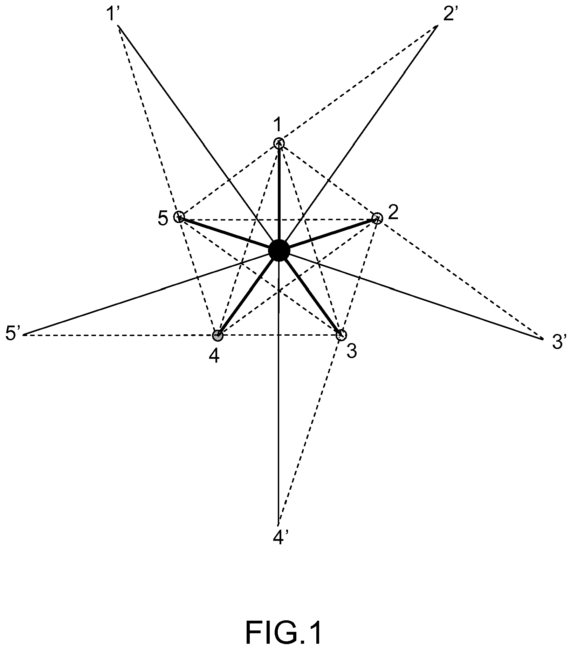

La figure 1 présente le cas dans lequel les couples d'antennes sont choisis afin d'avoir un écartement artificiel entre antennes supérieur à l'écartement maximal entre deux antennes.

Avantageusement les antennes sont réparties sur une ligne.

Avantageusement les antennes sont équiréparties sur un cercle.

Avantageusement le système comporte au moins quatre antennes et lesdits moyens configurés pour la détermination d'au moins deux déphasages sont configurés pour la détermination des déphasages associés à des couples d'antennes différents ayant une antenne en commun.

La présente invention propose aussi un procédé de détermination d'une direction d'arrivée d'un signal radio électrique comportant un étape de détermination d'au moins deux déphasages, respectivement associé à des couples d'antennes différents, lesdits déphasages étant la différence entre une phase du signal reçu d'une des antennes d'un couple et une phase du signal reçu de l'autre antenne du couple. Le procédé comport aussi une étape de sommation d'au moins deux des déphasages, une premier étape de détermination d'un ensemble de paramètres respectivement associés à une direction d'arrivée supposée, à partir de ladite sommation, par différence entre ladite sommation et une sommation de référence associée à la direction d'arrivée supposée et une deuxième étape de détermination de la direction d'arrivée comme étant la direction d'arrivée supposée associée au paramètre ayant la valeur minimale.

L'invention sera mieux comprise et d'autres avantages apparaîtront à la lecture de la description détaillée faite à titre d'exemple non limitatif et à l'aide des figures parmi lesquelles :

- la figure 1 présente le choix de couples d'antennes afin d'étendre la distance entre antennes
- la figure 2 présente un mode de réalisation du système selon l'invention

- la figure 3 présente un mode de réalisation d'une partie du dispositif 302 de détermination des déphasages

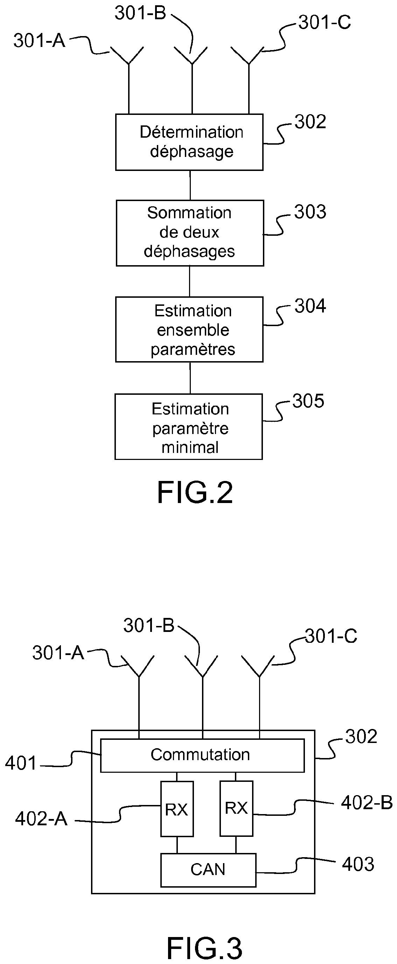

La figure 2 présente un premier mode de réalisation du système. Dans ce mode de réalisation le système comporte trois antennes 301-A, 301-B et 301-C. Le système comporte aussi un dispositif 302 de détermination d'au moins deux déphasages. Chaque déphasage est associé à un couple d'antennes, et il correspond à la différence entre la phase du signal reçu par une antenne et la phase du signal reçu par l'autre antenne.

Le système comporte ensuite un dispositif de sommation 303 de deux déphasages. Cette sommation permet de modifier artificiellement l'écartement entre les antennes de réception en créant une antenne virtuelle.

Ainsi dans l'exemple de la figure 1, si la différence, de la phase du signal reçu de l'antenne 3 et la phase du signal reçu de l'antenne 5, est sommée avec la différence, de la phase du signal reçu de l'antenne 3 et la phase du signal reçu de l'antenne 1, alors l'écart entre les antennes est agrandit. Cet écart agrandit correspond à la distance entre l'antenne 3 et l'antenne virtuelle 1'. Cette augmentation artificielle permet en particulier de déterminer la direction d'arrivée de signaux ayant une fréquence plus basse que celle déterminable sans le système décrit dans cette invention. En effet la fréquence du signal traitable dépend de l'inverse de la distance séparant les antennes (réelles ou virtuelles), donc plus cette distancer augmente plus cette fréquence est baisse. On obtient le même type de résultat en effectuant les sommations suivantes :

- Différence de la phase du signal reçu de l'antenne 4 et la phase du signal reçu de l'antenne 1 et différence de la phase du signal reçu de l'antenne 4 et la phase du signal reçu de l'antenne 2. La sommation correspond à la distance entre l'antenne 4 et l'antenne virtuelle 2'
- Différence de la phase du signal reçu de l'antenne 5 et la phase du signal reçu de l'antenne 2 et différence de la phase du signal reçu de l'antenne 5 et la phase du signal reçu de l'antenne 3. La sommation correspond à la distance entre l'antenne 5 et l'antenne virtuelle 3'
- Différence de la phase du signal reçu de l'antenne 1 et la phase du signal reçu de l'antenne 3 et différence de la phase du signal reçu de l'antenne 1 et la phase du signal reçu de l'antenne 4. La sommation correspond à la distance entre l'antenne 1 et l'antenne virtuelle 4'
- Différence de la phase du signal reçu de l'antenne 2 et la phase du signal reçu de l'antenne 4 et différence de la phase du signal reçu de l'antenne 2 et la phase du signal reçu de l'antenne 5. La sommation correspond à la distance entre l'antenne 2 et l'antenne virtuelle 5'.

Le système présenté figure 2 comporte aussi un premier dispositif 304 de détermination d'un ensemble de paramètres chacun associé à une direction d'arrivée supposée. Les paramètres sont calculés à partir de la différence entre la sommation et une sommation de référence associée à la direction d'arrivée supposée. Il est par exemple possible d'utiliser la relation suivante :

$$ D = \sum_{i=1}^{5} \left[ \Delta\varphi_{mes}^{i} - \Delta\varphi_{ref}^{i}(\theta) \right]^2 $$

Dans cette équation $\Delta\varphi_{mes}^{i}$ et $\Delta\varphi_{ref}^{i}(\theta)$ représentent respectivement les déphasages mesurés et les déphasages de référence. $\theta$ est la direction d'arrivée supposée et $D$ représente le paramètre associé à la direction d'arrivée supposée $\theta$.

Le système comporte aussi un deuxième dispositif 305 permettant de déterminer la paramètres minimal et la valeur de la direction d'arrivée supposée associée à ce paramètre.

La figure 3 présente un mode de réalisation d'une partie du dispositif 302 de détermination des déphasages. Ce dispositif comporte un premier sous-dispositif 401 permettant de faire une commutation entre les antennes de réception (301-A, 301-B et 301-C) et les voies de réception (402-A et 402-B). Ce sous-dispositif permet en particulier d'utiliser un nombre de voies de réception inférieur au nombre d'antennes de réception. Les voies de réception qui sont constituées de deux sous-dispositifs radio fréquence anagogique 402-A et 402-B et d'un dispositif de conversion analogique vers numérique (connu aussi sous l'acronyme CAN) 403. Les deux sous-dispositifs radio fréquence analogiques permettent en particulier d'effectuer le filtrage du signal reçu dans la bande utile, et l'amplification du signal reçu par utilisation d'amplificateurs à faible bruit.

Les différents dispositifs peuvent être réalisé sous la forme de circuit dédiés (connu aussi sous l'acronyme anglais d' « ASIC » pour Application-Specific Integrated Circuit), sous la forme d'un réseau programmable de portes (connu aussi sous l'acronyme anglais de « FPGA » pour field-programmable gate array) ou sous la forme d'une processeur générique couplé avec un produit programme d'ordinateur sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Système de détermination d'une direction d'arrivée d'un signal radio électrique comportant

   - au moins trois antennes,
   - des moyens configurés pour la détermination d'au moins deux déphasages, respectivement associés à des couples d'antennes différents, lesdits déphasages étant la différence entre une phase du signal reçu d'une première antenne d'un couple et une phase du signal reçu d'une deuxième antenne du même couple,

   ledit système étant **caractérisé en ce qu'**il comporte également ;

   - des moyens configurés pour calculer, par la sommation d'au moins deux déphasages associés à des couples d'antennes dont la première antenne est une antenne commune, un déphasage entre ladite antenne commune et une antenne virtuelle,
   - des premiers moyens configurés pour la détermination d'un ensemble de paramètres respectivement associés à une direction d'arrivée supposée, par différence entre ledit déphasage entre ladite antenne commune et une antenne virtuelle, et un déphasage de référence associé à la direction d'arrivée supposée, et
   - des deuxièmes moyens configurés pour la détermination de la direction d'arrivée comme étant la direction d'arrivée supposée associée au paramètre ayant la valeur minimale.

2. Système selon la revendication 1 dans lequel les antennes sont réparties sur une ligne.

3. Système selon la revendication 1 dans lequel les antennes sont équiréparties sur un cercle.

4. Système selon l'une des revendications 1 à 3 comportant au moins quatre antennes et dans lequel lesdits moyens configurés pour la détermination d'au moins deux déphasages sont configurés pour la détermination des déphasages associés à des couples d'antennes différents ayant une antenne en commun.

5. Procédé de détermination d'une direction d'arrivée d'un signal radio électrique comportant

   - un étape de détermination d'au moins deux déphasages, respectivement associés à des couples d'antennes différents, lesdits déphasages étant la différence entre une phase du signal reçu d'une première antenne d'un couple et une phase du signal reçu d'une deuxième antenne du même couple,

   ledit procédé étant **caractérisé en ce qu'**il comporte également ;

   - une étape de calcul, par la sommation d'au moins deux des déphasages associés à des couples d'antennes dont la première antenne est une antenne commune, d'un déphasage entre ladite antenne commune et une antenne virtuelle ,
   - une première étape de détermination d'un ensemble de paramètres respectivement associés à une direction d'arrivée supposée, par différence entre ledit déphasage entre l'une desdites antennes et une antenne virtuelle, et un déphasage de référence associée à la direction d'arrivée supposée, et
   - une deuxième étape de détermination de la direction d'arrivée comme étant la direction d'arrivée supposée associée au paramètre ayant la valeur minimale.

## Patentansprüche

1. System zur Bestimmung einer Ankunftsrichtung eines elektrischen Funksignals, welches beinhaltet

   - mindestens drei Antennen,
   - Mittel, welche zur Bestimmung von mindestens zwei Phasenverschiebungen konfiguriert sind, jeweils assoziiert mit unterschiedlichen Antennenpaaren, wobei die Phasenverschiebungen die Differenz zwischen einer Phase des empfangenen Signals von einer ersten Antenne eines Paares und einer Phase des empfangenen Signals von einer zweiten Antenne desselben Paares betragen,

   wobei das System **dadurch gekennzeichnet ist, dass** es zudem Folgendes beinhaltet:

   - Mittel, welche zur Berechnung, durch die Summierung von mindestens zwei mit Antennenpaaren, deren erste Antenne eine gemeinsame Antenne ist, assoziierten Phasenverschiebungen konfiguriert sind, einer Phasenverschiebung zwischen der gemeinsamen Antenne und einer virtuellen Antenne,
   - erste Mittel, welche zur Bestimmung einer Gruppe von Parametern konfiguriert sind, welche jeweils mit einer angenommenen Ankunftsrichtung assoziiert sind, durch Differenz zwischen der Phasenverschiebung zwischen der gemeinsamen Antenne und einer virtuellen Antenne, und einer Referenz-Phasenverschiebung, welche mit der angenommenen Ankunftsrichtung assoziiert ist, und

- zweite Mittel, welche zur Bestimmung der Ankunftsrichtung als einer angenommenen Ankunftsrichtung konfiguriert sind, welche mit dem Parameter mit dem niedrigsten Wert assoziiert ist.

2. System nach Anspruch 1, bei welchem die Antennen auf einer Linie verteilt sind.

3. System nach Anspruch 1, bei welchem die Antennen gleichmäßig auf einem Kreis verteilt sind.

4. System nach einem der Ansprüche 1 bis 3, beinhaltend mindestens vier Antennen, und in welchem die zum Bestimmen von mindestens zwei Phasenverschiebungen konfigurierten Mittel zur Bestimmung der mit unterschiedlichen Antennenpaaren assoziierten Phasenverschiebungen konfiguriert sind, welche eine Antenne gemeinsam besitzen.

5. Verfahren zur Bestimmung einer Ankunftsrichtung eines elektrischen Funksignals, Folgendes beinhaltend:

- einen Schritt der Bestimmung von mindestens zwei Phasenverschiebungen, jeweils assoziiert mit unterschiedlichen Antennenpaaren, wobei die Phasenverschiebungen die Differenz zwischen einer Phase des empfangenen Signals von einer ersten Antenne eines Paares und einer Phase des empfangenen Signals von einer zweiten Antenne desselben Paares betragen,

wobei das Verfahren **dadurch gekennzeichnet ist, dass** es zudem Folgendes beinhaltet:

- einen Schritt der Berechnung, durch die Summierung von mindestens zwei mit Antennenpaaren, deren erste Antenne eine gemeinsame Antenne ist, assoziierten Phasenverschiebungen, einer Phasenverschiebung zwischen der gemeinsamen Antenne und einer virtuellen Antenne,
- einen ersten Schritt der Bestimmung einer Gruppe von Parametern, welche jeweils mit einer angenommenen Ankunftsrichtung assoziiert sind, durch Differenz zwischen der Phasenverschiebung zwischen einer der Antennen und einer virtuellen Antenne, und einer Referenz-Phasenverschiebung, welche mit der angenommenen Ankunftsrichtung assoziiert ist, und
- einen zweiten Schritt der Bestimmung der Ankunftsrichtung als einer angenommenen Ankunftsrichtung, welche mit dem Parameter mit dem niedrigsten Wert assoziiert ist.

**Claims**

1. System for determining a direction of arrival of a radio signal comprising

- at least three antennas,
- means configured for determining at least two phase shifts, associated with various antenna pairs respectively, said phase shifts being the difference between a phase of the signal received from one of the antennas of a pair and a phase of the signal received from the other antenna of the same pair,

said system being **characterized in that** it also comprises:

- means configured for calculating, by summing at least two phase shifts associated with pairs of antennas, among which the first antenna is a common antenna, a phase shift, between said common antenna and a virtual antenna,
- first means configured for determining a set of parameters, respectively associated with a supposed direction of arrival, by calculating the difference between said phase shift between said common antenna and a virtual antenna, and a reference phase shift associated with the supposed direction of arrival; and
- second means configured for determining the direction of arrival as being the supposed direction of arrival associated with the parameter having the minimum value.

2. System according to Claim 1, in which the antennas are distributed in a line.

3. System according to Claim 1, in which the antennas are evenly distributed in a circle.

4. System according to any of Claims 1 to 3, comprising at least four antennas and in which said means configured for determining at least two phase shifts are configured for determining phase shifts associated with various antenna pairs having one antenna in common.

5. Method for determining a direction of arrival of a radio signal comprising:

- a step of determining at least two phase shifts, associated with various antenna pairs respectively, said phase shifts being the difference between a phase of the signal received from one of the antennas of a pair and a phase of the signal received from the other antenna of the same pair;

said method being **characterized in that** it also comprises:

- a step of calculation, by summing at least two of the phase shifts associated with pairs of antennas, among which the first antenna is a common antenna, of a phase shift between said common antenna and a virtual antenna,

- a first step of determining a set of parameters respectively associated with a supposed direction of arrival, by calculating the difference between said phase shift between one of the said antennas and a virtual antenna, and a reference phase shift associated with the supposed direction of arrival; and

- a second step of determining the direction of arrival as being the supposed direction of arrival associated with the parameter having the minimum value.

FIG.1

**FIG.2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4136342 A